# EUROPÄISCHE PATENTSCHRIFT

(11) **EP 4 054 347 B1**
(45) Veröffentlichungstag und Bekanntmachung des Hinweises auf die Patenterteilung: **27.12.2023**
(21) Anmeldenummer: 20803122.9
(22) Anmeldetag: 04.11.2020
(51) Int. Cl.: B01F 23/236

(54) **VERFAHREN UND VORRICHTUNG ZUR HERSTELLUNG EINES KARBONISIERTEN GETRÄNKS**
METHOD AND DEVICE FOR PRODUCING A CARBONATED BEVERAGE
PROCÉDÉ ET DISPOSITIF DE PRODUCTION D'UNE BOISSON GAZEUSE

(30) Priorität: 08.11.2019 DE 102019217331
(43) Veröffentlichungstag der Anmeldung: 14.09.2022
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH); SONDEREGGER, Remo, 8274 Tägerwilen (CH)
(74) Vertreter: Kutzenberger Wolff & Partner
(86) Internationale Anmeldenummer: PCT/EP2020/080961
(87) Internationale Veröffentlichungsnummer: WO 2021/089621

(56) Entgegenhaltungen:
- EP-A1- 1 091 050
- WO-A1-2019/101997
- DE-A1-102011 001 252
- DE-A1-102017 120 323

## Beschreibung

Die Erfindung betrifft ein Verfahren zur portionsweisen Herstellung eines Getränks, bei dem eine Getränkekonzentratportion mit einer Wasserportion gemischt wird, wobei die Wasserportion vor der Vermischung mit dem Getränkekonzentrat mit Kohlenstoffdioxid strikt gemäß Anspruch 1 versetzt wird. Des Weiteren betrifft die vorliegende Erfindung eine Vorrichtung zur portionsweisen Herstellung eines Getränks, bei dem eine Getränkekonzentratportion mit einer Wasserportion gemischt wird, wobei die Wasserportion vor der Vermischung mit dem Getränkekonzentrat mit Kohlenstoffdioxid in einem Statikmischer strikt gemäß Anspruch 6 versetzt wird.

Der Bedarf an portionsweiser Herstellung von karbonisierten Getränken unter Verwendung einer Getränkekonzentratportion steigt ständig. In der Vergangenheit war jedoch oftmals die Karbonisierung nicht ausreichend, so dass das portionsweise mit einer Getränkekonzentratportion hergestellte Getränk nicht wie das in Flaschen oder Fässern abgefüllte Original schmeckte. So lehrt DE102011001252 ein Verfahren und eine Vorrichtung zur portionsweisen Herstellung von wasserbasierten karbonisierten Postmix-Getränken zum direkten Verbrauch, wobei Wasser karbonisiert und anschließend mit einem portionsweise abgepackten vorkarbonisierten Getränkekonzentrat vermischt wird.

Es war deshalb die Aufgabe ein Verfahren und eine Vorrichtung Verfahren zur portionsweisen Herstellung eines Getränks, bei dem eine Getränkekonzentratportion mit einer Wasserportion gemischt wird, zur Verfügung zu stellen, das/die die Nachteile des Standes der Technik nicht aufweist.

Gelöst wird die Aufgabe mit einem Verfahren zur portionsweisen Herstellung eines Getränks, bei dem eine Getränkekonzentratportion mit einer Wasserportion gemischt wird, wobei die Wasserportion vor der Vermischung mit dem Getränkekonzentrat mit Kohlenstoffdioxid versetzt wird, bei dem die Versetzung mit Kohlenstoffdioxid bei einem Überdruck von mindestens 7 Bar, vorzugsweise > 8 Bar, besonders bevorzugt bei 9- 11 Bar erfolgt.

Die zu diesem Gegenstand der vorliegenden Erfindung gemachte Offenbarung gilt auch für die anderen Gegenstände der vorliegenden Erfindung. Merkmale, die im Zusammenhang mit diesem Gegenstand der vorliegenden Erfindung offenbar wurden, können auch in andere Gegenstände aufgenommen werden.

Die vorliegende Erfindung betrifft ein Verfahren zur portionsweisen Herstellung eines Getränks. Dafür wird Getränkekonzentratportion, insbesondere in einer Ein- oder Mehrwegverpackung zur Verfügung gestellt, deren flüssiger oder pulverförmiger Inhalt mit einer Wasserportion, insbesondere einer Leitungswasserportion vermischt wird, die das fertige Getränk bilden. Vor der Vermischung mit dem Getränkekonzentrat mit Kohlenstoffdioxid versetzt das Wasser mit Kohlenstoffdioxidblasen versetzt und das Kohlendioxid zumindest teilweise, vorzugsweise vollständig in dem Wasser gelöst. Der Versatz des Wassers mit dem Kohlenstoffdioxid erfolgt vorzugsweise ebenfalls portionsweise und besonders bevorzugt unmittelbar bevor das karbonisierte Wasser mit dem Getränkekonzentrat gemischt wird.

Der Versatz des Wassers mit dem Kohlenstoffdioxid erfolgt vorzugsweise ein einem kontinuierlichen Prozess, bei dem Wasser und Kohlenstoffdioxid in einem aufeinander abgestimmten Verhältnis versetzt werden.

Erfindungsgemäß herrscht während des Versatzes des Wassers mit Kohlenstoffdioxid ein Überdruck von mindestens 7 Bar, vorzugsweise > 8 Bar, besonders bevorzugt bei 9- 11 Bar. Dadurch löst sich das Kohlenstoffdioxid in dem Wasser zumindest weitestgehend, vorzugsweise vollständig.

Die Wasserportion wird vorzugsweise einem Wassertank entnommen und mit einer Pumpe auf den gewünschten Druck gebracht. Der Kohlenstoffdioxid wird vorzugsweise einer Druckflasche entnommen.

Die Vermischung von Wasser und Kohlenstoffdioxid erfolgt vorzugsweise portionsweise aber besonders bevorzugt kontinuierlich, während das Wasser fließt, insbesondere zur Getränkeherstellung einem Wassertank entnommen wird.

Gemäß einer bevorzugten Ausführungsform wird das Wasser vor dem Mischen mit Kohlenstoffdioxid bei einer Temperatur von 0 - 4°C zur Verfügung gestellt. Gemäß einer weiteren bevorzugten Ausführungsform wird das Wasser vor dem Mischen mit Kohlenstoffdioxid bei einer Temperatur von 4 - 10 °C zur Verfügung gestellt. Dafür wird das Wasser nach der Entnahme aus dem Wassertank vorzugsweise gekühlt, insbesondere in einem Wärmetauscher gekühlt. Die Kühlung des Wassers erfolgt vorzugsweise portionsweise.

Der Kohlenstoffdioxid wird dem Wasser vorzugsweise, zumindest im Wesentlichen blasenförmig, zugemischt. Die Lösung des Kohlenstoffdioxids in dem Wasser durch Mischung des Kohlenstoffdioxids mit dem Wasser erfolgt in einem Statikmischer,
wobei gemäß einer anderen bevorzugten Ausführungsform alternativ oder zusätzlich ein dynamischer Mischer, d.h. ein Mischer mit einem Rotor, eingesetzt wird. Besonders bevorzugt beträgt die Strömungsgeschwindigkeit in dem Statikmischer 3 - 8 m/s.

In dem Statikmischer herrscht vor und nach der Herstellung der karbonisierten Wasserportion vorzugsweise ein im Vergleich zu Betriebsbedingungen verminderter Druck, vorzugsweise Umgebungsdruck. Sobald das für die Herstellung einer Getränkeportion benötigte Wasservolumen karbonisiert worden ist, wird die Pumpe abgeschaltet und der Druck in dem Statikmischer reduziert sich, vorzugsweise auf Umgebungsdruck.

Gemäß einer bevorzugten Ausführungsform wird das Verhältnis von Wasser- zu Kohlenstoffdioxid-Menge geregelt. Besonders bevorzugt wird dafür der Volumenstrom und/oder die Strömungsgeschwindgkeit des Wassers gemessen und der Kohlenstoffdioxid-Volumenstrom entsprechend zudosiert.

Die Aufgabe wird außerdem mit einer Vorrichtung zur portionsweisen Herstellung eines Getränks gelöst, bei dem eine Getränkekonzentratportion mit einer Wasserportion gemischt wird, wobei die Wasserportion vor der Vermischung mit dem Getränkekonzentrat mit Kohlenstoffdioxid in einem Statikmischer versetzt wird und der Statikmischer aus mehreren Mischerstufen gebildet ist.

Die zu diesem Gegenstand der vorliegenden Erfindung gemachte Offenbarung gilt auch für die anderen Gegenstände der vorliegenden Erfindung. Merkmale, die im Zusammenhang mit diesem Gegenstand der vorliegenden Erfindung offenbar wurden, können auch in andere Gegenstände aufgenommen werden.

Dieser Gegenstand der vorliegenden Erfindung betrifft eine Vorrichtung zur portionsweisen Herstellung eines Getränks. Eine Portion Wasser wird mit einer Portion eines Getränkekonzentrats gemischt und daraus resultiert das herzustellende Getränk. Vor der Vermischung mit dem Getränkekonzentrat wird das Wasser karbonisiert. Dafür wird dem Wasser Kohlenstoffdioxid zugesetzt und in einem Statikmischer so miteinander Vermischt, dass das sich zudosierte Kohlenstoffdioxid zumindest weitestgehend in dem Wasser löst.

Erfindungsgemäß weist der Statikmischer mehrere Mischerstufen auf, die beispielsweise durch eine Wand mit einer Ausnehmung voneinander getrennt sind. Durch die Ausnehmung strömen das Wasser und das Kohlenstoffdioxid.

Vorzugsweise ist der Statikmischer einstückig gefertigt, vorzugsweise als Kunststoffspritzgussteil.

Vorzugsweise bildet der Ausgang einer stromabwärtigen Mischerstufe eine Düse für die daran benachbarte stromaufwärtige Mischerstufe.

Vorzugsweise vermindert sich der Durchströmungsquerschnitt des Statikmischers in Strömungsrichtung, vorzugsweise stufenförmig.

Vorzugsweise sind zwei bis vier, bevorzugt vier Statikmischer, insbesondere baugleiche Statikmischer in Reihe geschaltet.

Stromabwärts von dem Statikmischer ist ein Kompensator vorgesehen. Das karbonisierte Wasser strömt durch den Kompensator bevor es für die Herstellung eines Getränks eingesetzt wird. Der Kompensator kann zur Druckminderung eingesetzt werden, bei der wenig Gas aus der Flüssigkeit ausgast.

Der Kompensator ist vorzugsweise ein im Wesentlichen rotationssymmetrisches Bauteil Vorzugsweise weist der Kompensator einen Einlass und einen Auslass auf und der Auslass versetzt zur Längsmittelachse des Kompensators vorgesehen ist. Gemäß dieser bevorzugten Ausführungsform der vorliegenden Erfindung ist der Auslass versetzt zur Längsmittelachse, vorzugsweise exzentrisch zur Längsmittelachse des Kompensators vorgesehen. Dadurch ist das Zentrum des Kompensators frei und kann für andere Zwecke, beispielsweise zur Druckverlustregulierung eingesetzt werden.

Vorzugsweise weist der Kompensator ein Gehäuse auf, in dem sich ein Einbauelement befindet, wobei sich zwischen dem Gehäuse und dem Einbauelement ein Spalt, dessen Breite vorzugsweise einstellbar ist, befindet. Durch diesen Spalt strömt das Karbonisierte Wasser von dem Einlass des Kompensators zu dessen Auslass. Die Spaltbreite ist vorzugsweise über dessen gesamte Länge konstant.

Vorzugsweise weist das Einbauelement einen konischen und einen zylindrischen Abschnitt auf, wobei an dem zylindrischen Abschnitt Vorsprünge und/oder Einbuchtungen vorgesehen sind, deren Länge in Längsrichtung maximal 40% der Länge des zylindrischen Teils beträgt. Gemäß einer bevorzugten Ausführungsform sind an dem konischen Teil des Einbauelementes Rippen vorgesehen, die vorzugsweise elastisch sind. Die Rippen können aus dem gleichen oder einem anderen Material als das Einbauelement bestehen und/oder eine Ausprägung des konischen Teils des Einbauelementes sein. Vorzugsweise sind in dem Einbauelement Einbuchtungen vorgesehen, die die Rippen from- und/oder kraftschlüssig aufnehmen.

Im Folgenden wird die Erfindung anhand der Figuren 1 - 4 erläutert.
- Figur 1: zeigt schematisch das erfindugsgemäße Verfahren.
- Figuren 2 - 4: zeigen jeweils eine Darstellung des Kompensators.

Diese Erläuterungen sind lediglich beispielhaft und schränken den allgemeinen Erfindungsgedanken nicht ein. Diese Erläuterungen gelten für alle Gegenstände der vorliegenden Erfindung gleichermaßen.

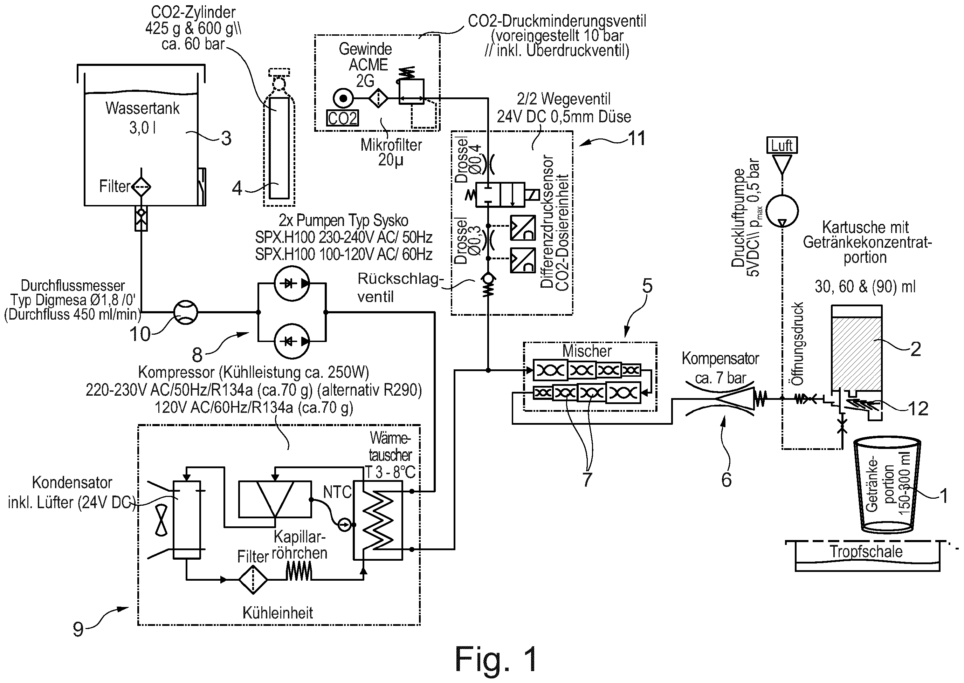

Figur 1 zeigt die Vorrichtung zur Herstellung eines Getränkes 1. Für die Herstellung des Getränks wird ein Getränkekonzentrat, das in dem vorliegenden Fall als Portion 2 in einer Ein- oder Mehrwegverpackung, beispielsweise einer Kunststoff- oder Metallkartusche zur Verfügung gestellt wird, mit einer Portion Wasser, beispielsweise 200 ml, gemischt und dann in einem Behälter gesammelt. Das Wasser wird in dem Wassertank 3 zur Verfügung gestellt und mittels der Pumpe 8, hier zwei parallel geschaltete bzw. redundante Pumpen, auf den gewünschten Druck von mindestens 7 bar gebracht. Die Durchflussmenge, die von dem Tank 3 in den Behälter 1 läuft, wird vorzugsweise mittels eines Durchflussmessers 10 überwacht, der vorzugsweise auch die Pumpen so steuert, dass das gewünschte Volumen an Wasser gefördert wird. Für die Herstellung eines Getränks wird die Pumpe vorzugsweise an- und nach dem Bezug der gewünschten Wassermenge wieder abgeschaltet. Vorzugsweise wird das Wasser, insbesondere vor dessen Karbonisierung, gekühlt. Dafür ist eine Wasserkühlung, die einen Wärmetauscher mit einem Kühlwasserkreislauf aufweist, vorgesehen. Das CO₂ wird dem Wasser vorzugsweise nach der Kühlung zudosiert. Das CO₂ wird einem Kohlenstoffdioxidvorrat 4, hier eine Druckflasche, entnommen und mittels einer CO₂-Dosierung 11 in das Wasser, insbesondere blasenförmig, eindosiert. Vorzugsweise erfolgt die CO₂-Dosierung in Abhängigkeit von der Durchflussmenge an Wasser, die mittels des Durchflussmessers 10 ermittelt wird. Stromabwärts von der CO₂-Dosierung ist ein Mischer, hier ein Statikmischer 5 vorgesehen, der hier zweistufig ausgeführt ist, wobei jede Stufe vorzugsweise mehrere Mischerstufen aufweisen kann. Der Statikmischer ist vorzugsweise so konstruiert, dass sich der Durchströmungsquerschitt nach jeder Mischerstufe in Strömungsrichtung vermindert. Vorzugsweise sind die beiden Stufen des Statikmischers gleichförmig ausgefürt. Vorzugsweise ist der Statikmischer ein Kunststoffteil, insbesondere ein Kunststoffspritzteil. In dem Statikmischer wird das blasenförmig eindosierte CO₂, vorzugsweise insbesondere vollständig, in dem Wasser gelöst. Stromabwärts von dem Statikmischer ist ein Kompensator vorgesehen, mit dem der Druck in dem Statikmischer eingestellt werden kann. Dieser Druck sollte erfindungsgemäß mindestens 7 bar betragen.

Vorzugsweise ist die Verweilzeit des Wassers zwischen dem Statikmischer und der Kammer 12, in der das karbonisierte Wasser mit der Getränkekonzentratportion vermischt wird möglichst kurz. Das fertige Getränk läuft aus der Getränkekonzentratportionskapsel 2 aus und wird in einem Behälter, hier einem Glas aufgefangen. Das Getränkekonzentrat wird vorzugsweise aus der Portionskapsel 2 mittels Luft herausgedrückt.

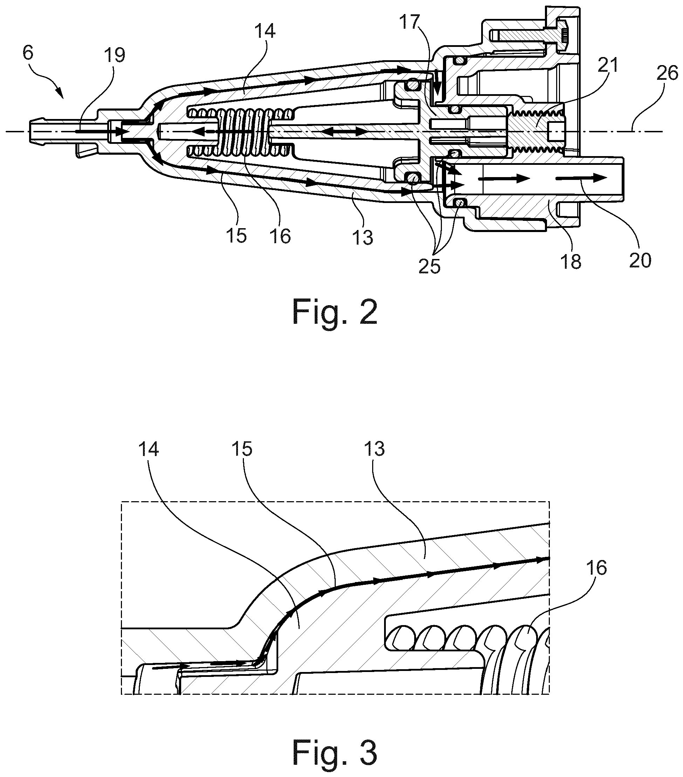

Die Figuren 2 bis 4 zeigen jeweils eine Darstellung des Kompensators 6. Der Kompensator 6 ist stromabwärts von dem Mischer 5 vorgesehen. Der Kompensator 6 weist ein Gehäuse 13 auf, in dem ein Einbauelement 14 vorgesehen ist. In dem vorliegenden Fall sind das Einbauelement 14 und das Gehäuse 13 im Wesentlichen rotationssysmmetrisch vorgesehen. Der Kompensator 6 weist eine Längsmittelachse 26 auf. In dem Gehäuse 13 befindet sich ein Einlass 19, durch den das karbonisierte Wasser einströmt und sodann in einem Spalt 15, der sich zwischen dem Gehäuse 13 und dem Einbauelement 14 befindet, in Richtung des Auslasses 20 strömt. In dem vorliegenden Fall ist der Auslass 20 versetzt zur Längsmittelachse 26 vorgesehen. Des Weiteren ist der Auslass in dem vorliegenden Beispiel in einem Einsatz 18 vorgesehen, der in das Gehäuse 13 eingesetzt wird. Zwischen dem Einbauelement und dem Einsatz 18 ist ein Einstellmittel 17 vorgesehen, das mittels der Schraube 21, die sich in dem vorliegenden Fall mit einem Gewinde, das sich in dem Einsatz 18 befindet, in die durch den Doppelpfeil dargestellten Richtungen verstellen lässt. Dadurch kann die Breite des Spaltes 15 und damit der Druckverlust, der in dem Kompensator anfällt, eingestellt werden. Zwischen dem Einstellmittel 17 und dem Einbauelement 14 ist in dem vorliegenden Fall ein Federelement 16 vorgesehen, das versucht, das Einbauelement in Richtung des Einlasses und/oder in Richtung eines möglichst kleinen Spaltes vorzuspannen. Sowohl an dem Einstellmittel 17 als auch an dem Einsatz 18 können Dichtungselemente 25 vorgesehen sein, die verhindern, dass das Wasser, das in Richtung Auslass strömt, den Kompensator an ungewünschten Stellen verlässt.

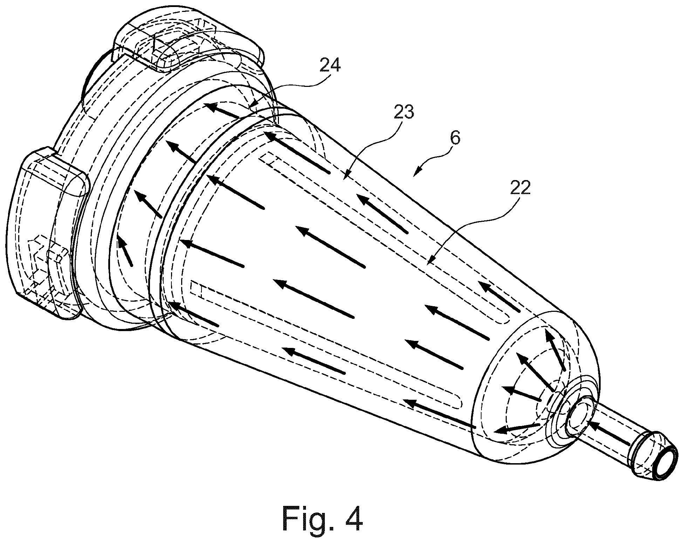

Wie insbesondere Figur 4 entnommen werden kann, weist das Einbauelement 14 hier einen konischen Teil 23 und einen zylindrischen Teil 24 auf. Wie ebenfalls insbesondere Figur 4 entnommen werden kann, sind insbesondere an dem konischen Teil vorzugsweise Rippen 22 vorgesehen, die das Einbauelement von dem Gehäuse beabstanden und dadurch Kanäle 15 zur Verfügung stellen, durch die die Flüssigkeit von dem Einlass in Richtung des Auslasses, wie durch die Pfeile dargestellt, strömen kann.

### Bezugszeichenliste:

- 1: Getränk
- 2: Getränkekonzentratportion, Getränkekonzentratportionskapsel
- 3: Wasserportion, Wassertank
- 4: Kohlenstoffdioxid, Kohlenstoffdioxidvorrat
- 5: Mischer, Statikmischer
- 6: Kompensator
- 7: Mischerstufe
- 8: Pumpe
- 9: Wasserkühlung
- 10: Durchflussmesser
- 11: CO₂-Dosierung
- 12: Mischkammer
- 13: Gehäuse
- 14: Einbauelement
- 15: Strömungskanal zwischen dem Gehäuse und dem Einbauelement
- 16: Federmittel
- 17: Einstellmittel für die Breite des Strömungskanals
- 18: Einsatz
- 19: Einlass
- 20: Auslass
- 21: Schraube, Mutter
- 22: Rippe
- 23: Konischer Teil des Einbauelementes 14
- 24: Zylindrischer Teil des Einbauelementes 14
- 25: Dichtung
- 26: Längsmittelachse

## Patentansprüche

1. Verfahren zur portionsweisen Herstellung eines Getränks (1), bei dem eine Getränkekonzentratportion (2) mit einer Wasserportion (3) gemischt wird, wobei die Wasserportion vor der Vermischung mit dem Getränkekonzentrat mit Kohlenstoffdioxid (4) in einem Statikmischer (5) versetzt wird, wobei die Versetzung mit Kohlenstoffdioxid bei einem Überdruck von mindestens 7 Bar, vorzugsweise > 8 Bar, besonders bevorzugt bei 9-11 Bar erfolgt, **dadurch gekennzeichnet, dass** stromabwärts von dem Statikmischer ein Kompensator (6) vorgesehen wird.

2. Verfahren nach Anspruch 1, **dadurch gekennzeichnet, dass** das Wasser vor dem Mischen mit Kohlenstoffdioxid bei einer Temperatur von 0 - 10 °C, bevorzugt von 0 - 4°C zur Verfügung gestellt wird.

3. Verfahren nach Anspruch 1 oder 2, **dadurch gekennzeichnet, dass** die Strömungsgeschwindigkeit in dem Statikmischer 3-8 m/s beträgt.

4. Verfahren nach einem der vorherigen Ansprüche, **dadurch gekennzeichnet, dass** in dem Statikmischer vor und nach der Herstellung der Wasserportion ein im Vergleich zu Betriebsbedingungen verminderter Druck, vorzugsweise Umgebungsdruck vorliegt.

5. Verfahren nach einem der voranstehenden Ansprüche, **dadurch gekennzeichnet, dass** das Verhältnis von Wasser- zu Kohlenstoffdioxid-Menge geregelt wird.

6. Vorrichtung zur portionsweisen Herstellung eines Getränks, bei dem eine Getränkekonzentratportion (2) mit einer Wasserportion (3) gemischt wird, wobei die Wasserportion vor der Vermischung mit dem Getränkekonzentrat mit Kohlenstoffdioxid (4) in einem Statikmischer (5) versetzt wird, wobei der Statikmischer (5) aus mehreren Mischerstufen (7) gebildet ist, **dadurch gekennzeichnet, dass** stromabwärts von dem Statikmischer (5) ein Kompensator (6) vorgesehen ist.

7. Vorrichtung nach Anspruch 6, **dadurch gekennzeichnet, dass** der Ausgang einer stromabwärtigen Mischerstufe eine Düse für die daran benachbarte stromaufwärtige Mischerstufe bildet.

8. Vorrichtung nach Anspruch 6 oder 7, **dadurch gekennzeichnet, dass** sich der Durchströmungsquerschnitt des Statikmischers (5) in Strömungsrichtung vermindert.

9. Vorrichtung nach Anspruch 8, **dadurch gekennzeichnet, dass** sich der Durchströmungsquerschnitt stufenweise verringert.

10. Vorrichtung nach Anspruch 9, **dadurch gekennzeichnet, dass** der Kompensator einen Einlass (19) und einen Auslass (20) aufweist und der Auslass (20) versetzt zur Längsmittelachse, vorzugsweise exzentrisch zur Längsmittelachse (26) des Kompensators vorgesehen ist.

11. Vorrichtung nach einem der Ansprüche 9 oder 10, **dadurch gekennzeichnet, dass** der Kompensator (6) ein Gehäuse (13) aufweist, in dem sich ein Einbauelement (14) befindet, das einen konischen und einen zylindrischen Abschnitt 23, 24) aufweist, wobei an dem zylindrischen Abschnitt Vorsprünge und/oder Einbuchtungen vorgesehen sind, deren Länge in Längsrichtung maximal 40% der Länge des zylindrischen Teils ist.

12. Vorrichtung nach Anspruch 11, **dadurch gekennzeichnet, dass** an dem konischen Teil Rippen (22) vorgesehen sind, die vorzugsweise elastisch sind.

## Claims

1. Method for portionwise preparation of a beverage (1), in which a portion of beverage concentrate (2) is mixed with a portion of water (3), wherein the portion of water is admixed with carbon dioxide (4) in a static mixer (5) prior to mixing with the beverage concentrate, wherein the admixing with carbon dioxide is done at a positive pressure of at least 7 bar, preferably > 8 bar, particularly preferably at 9-11 bar, **characterized in that** a compensator (6) is provided downstream of the static mixer.

2. Method according to Claim 1, **characterized in that** the water is provided at a temperature of 0-10°C, preferably of 0-4°C, prior to mixing with carbon dioxide.

3. Method according to Claim 1 or 2, **characterized in that** the flow rate in the static mixer is 3-8 m/s.

4. Method according to any of the preceding claims, **characterized in that** a reduced pressure compared to the operating conditions, preferably ambient pressure, is present in the static mixer before and after the preparation of the portion of water.

5. Method according to any of the preceding claims, **characterized in that** the ratio of the amount of water to the amount of carbon dioxide is regulated.

6. Device for portionwise preparation of a beverage, in which a portion of beverage concentrate (2) is mixed with a portion of water (3), wherein the portion of water is admixed with carbon dioxide (4) in a static mixer (5) prior to mixing with the beverage concentrate, wherein the static mixer (5) is formed of multiple mixer stages (7), **characterized in that** a compensator (6) is provided downstream of the static mixer (5).

7. Device according to Claim 6, **characterized in that** the exit of a downstream mixer stage forms a nozzle for the upstream mixer stage adjacent thereto.

8. Device according to Claim 6 or 7, **characterized in that** the flow cross section of the static mixer (5) decreases in the direction of flow.

9. Device according to Claim 8, **characterized in that** the flow cross section decreases in steps.

10. Device according to Claim 9, **characterized in that** the compensator has an inlet (19) and an outlet (20), and the outlet (20) is offset from the longitudinal central axis of the compensator, preferably eccentric to the longitudinal central axis (26) of the compensator.

11. Device according to either of Claims 9 and 10, **characterized in that** the compensator (6) has a housing (13) in which a fitted element (14) having a conical and a cylindrical section (23, 24) is present, wherein the cylindrical section has provided thereon projections and/or indentations, the length of which in the longitudinal direction is at most 40% of the length of the cylindrical part.

12. Device according to Claim 11, **characterized in that** the conical part has provided thereon ribs (22), which are preferably elastic.

## Revendications

1. Procédé de fabrication par portions d'une boisson (1), dans lequel on mélange une portion de concentré de boisson (2) à une portion d'eau (3), la portion d'eau étant, avant mélange avec le concentré de boisson, additionnée de dioxyde de carbone (4) dans un mélangeur statique (5), l'ajout du dioxyde de carbone s'effectuant sous une surpression d'au moins 7 bar, de préférence > 8 bar, d'une manière particulièrement préférée sous 9 à 11 bar, **caractérisé en ce qu'**un compensateur (6) est prévu en aval du mélangeur statique.

2. Procédé selon la revendication 1, **caractérisé en ce que** l'eau est, avant mélange avec le dioxyde de carbone, mise à disposition à une température de 0 à 10 °C, de préférence de 0 à 4 °C.

3. Procédé selon la revendication 1 ou 2, **caractérisé en ce que** la vitesse d'écoulement dans le mélangeur statique est de 3 à 8 m/s.

4. Procédé selon l'une des revendications précédentes, **caractérisé en ce que**, dans le mélangeur statique, avant et après la fabrication de la portion d'eau, il règne une pression réduite par rapport aux conditions de marche, de préférence la pression ambiante.

5. Procédé selon l'une des revendications précédentes, **caractérisé en ce que** le rapport de la quantité d'eau à la quantité de dioxyde de carbone est régulé.

6. Dispositif de fabrication par portions d'une boisson, dans lequel une portion de concentré de boisson (2) est mélangée à une portion d'eau (3), la portion d'eau étant, avant le mélange avec le concentré de boisson, additionnée de dioxyde de carbone (4) dans un mélangeur statique (5), le mélangeur statique (5) étant formé de plusieurs étages mélangeurs (7), **caractérisé en ce qu'**un compensateur est prévu en aval du mélangeur statique (5).

7. Dispositif selon la revendication 6, **caractérisé en ce que** la sortie d'un étage mélangeur en aval forme une buse pour l'étage mélangeur immédiatement voisin en amont.

8. Dispositif selon la revendication 6 ou 7, **caractérisé en ce que** la section de passage du mélangeur statique (5) diminue dans le sens de l'écoulement.

9. Dispositif selon la revendication 8, **caractérisé en ce que** le diamètre de passage diminue pas à pas.

10. Dispositif selon la revendication 9, **caractérisé en ce que** le compensateur comprend un orifice d'entrée (19) et un orifice de sortie (20), et l'orifice de sortie (20) est prévu décalé par rapport à l'axe longitudinal, de préférence en position excentrée par rapport à l'axe longitudinal (26) du compensateur.

11. Dispositif selon l'une des revendications 9 ou 10, **caractérisé en ce que** le compensateur (6) comprend une enveloppe (13) dans laquelle se trouve un insert (14), qui présente une section conique et une section cylindrique (23, 24), des protubérances et/ou des renfoncements dont la longueur dans la direction longitudinale représente au maximum 40 % de la longueur de la partie cylindrique sont prévus sur la section cylindrique.

12. Dispositif selon la revendication 11, **caractérisé en ce qu'**il est prévu sur la partie conique des nervures (22) qui de préférence sont élastiques.
